# EUROPEAN PATENT APPLICATION

(11) **EP 0 987 639 A1**
(43) Date of publication of application: **22.03.2000**
(21) Application number: 99402222.6
(22) Date of filing: 09.09.1999
(51) Int. Cl.: G06F 17/30, H04L 29/06

(54) **Management of a table of links between documents stored on a computer server and ordering and transfer of documents in a network**

(30) Priority: 15.09.1998 FR 9811489; 15.09.1998 FR 9811490
(71) Applicant: CANON RESEARCH CENTRE-FRANCE S.A., 35517 Cesson Sevigne Cedex (FR)
(72) Inventor: Moreau, Jean-Jacques, 35000 Rennes (FR)
(74) Representative: Rinuy, Santarelli

(57) **Abstract**

A method of managing a table of links between documents linked by hypertext links stored on a multiuser computer server, a computer request including a field containing the requested electronic address (URL2) of the requested document and a field containing the previous electronic address (URL1) of the previously requested document, comprises the steps of receiving (E10) the computer request transmitted by the communication network, extracting (E11, E12) the previous electronic address (URL1) and the requested electronic address (URL2), verifying (E13) the existence or not of the association (URL1-URL2) in the table of links, adding (E14) the association (URL1-URL2) in the table of links if it does not exist, and incrementing (E15) a weighting factor associated with the association (URL1-URL2) in the table of links (6) each time a computer request containing this association is received. Use notably for accelerating the transfer of documents in a computer network.

## Description

The present invention concerns a method of managing a table of links between documents linked by hypertext links.

Correlatively it concerns a device for managing a table of links implementing the management method according to the invention.

It also concerns a method of generating a computer request which can be used by the management method according to the invention.

Correlatively it concerns a device for generating a computer request implementing the aforementioned generation method.

The present invention also concerns an ordering method and an associated method of transferring documents linked by hypertext links and stored on a multiuser computer server, via a communication network connecting users to the computer server.

Correlatively it concerns an ordering device and a transfer device implementing respectively the ordering and transfer methods according to the invention.

The present invention fits in more general terms within the field of computer communication networks which make it possible to transfer information between computer servers storing electronic documents and one or more users. Throughout the remainder of the description, the documents envisaged can be of very varied natures: text files, images, videos, sound etc.

In practice, in computer communication networks, there are linked numerous computers and peripherals, such as printers, storage units and means of acquiring, processing or storing images for other types of documents.

The present invention applies to communication networks which define a protocol for communication between computers enabling the computers and peripherals implementing this protocol to exchange documents.

The communication networks also define an annotation language which in particular makes it possible to link documents together by hypertext links. Each hypertext link, normally referred to as a pointer, is included in a first document and contains data concerning the address of a second document. The second document can of course in turn contain pointers to other documents and so on. A diagram of documents linked by hypertext links is obtained, which may be complex and bulky.

Two types of pointer are generally distinguished.

A first type of pointer makes it possible to include in a document one or more other documents as if they formed part of the original document (for example an image which supplements the text of the original document). In this case, when a user establishes a computer request for requesting the transmission of the original document via the communication network, the browser associated with the user establishes the complementary computer requests in order to obtain the transfer of the different documents linked to this original document by this first type of pointer.

A second type of pointer makes it possible to link independent documents together. After transmission of a first document by the communication network, the user can decide to establish new computer requests in order to obtain documents linked by hypertext links in the first document, directly using the pointers included in the first document. In practice, the user can click on an icon or a word displayed in the first document, so that the browser associated with the user sends the corresponding computer request to the following document requested by the user by means of the pointer.

Because of the increase in volume of documents stored and available on computer servers, notably in communication networks existing on a world scale, such as the Internet, has become essential to be able to manage all these stored documents, notably with a view to effectively organising storage of the documents on the computer servers, facilitating and accelerating access thereto by means of the communication network and eliminating unnecessary documents therefrom.

In US patent 5 446 891 (KAPLAN et al), a document hypertext system is known in which a table of links is created at the level of a database, by the designer of the data base, this table of links grouping together all the hypertext links existing between the stored documents. A weighting factor is associated with each of these hypertext links, reflecting the probabilities of a user requesting the communication of a second document linked by a hypertext link to a first document. These weighting factors can be modified automatically by measuring the time spent by the user on reading the second document during a previous consultation of a database.

The aim of the present invention is to propose an efficient method of managing a table of links, notably for computer servers storing a very large volume of documents.

To this end, the present invention concerns a method of managing a table of links between documents linked by hypertext links and stored on a multiuser computer server, said computer server being linked by a communication network to users adapted to establish a computer request for requesting communication, via the communication network, of a document linked by a hypertext link to a previously requested document, said computer request containing the requested electronic address of the requested document and the previous electronic address of the previously requested document.

According to the invention, the management method comprises the following steps:
- receiving said computer request transmitted by the communication network;
- extracting the previous electronic address;
- extracting the requested electronic address;
- verifying the existence or not of the association of the previous electronic address and the requested electronic address in said table of links;
- adding the association in the table of links if said association does not exist in said table of links; and
- incrementing a weighting factor associated with said association in the table of links on each reception of a computer request containing said association.

Correlatively, the present invention concerns a device for managing a table of links between documents linked by hypertext links and stored on a multiuser computer server, said computer server being linked by a communication network to users adapted to establish a computer request for requesting communication, via the communication network, of a document linked by a hypertext link to a previously requested document, said computer request containing the requested electronic address of the requested document and the previous electronic address of the previously requested document, said device comprising:
- means of receiving said computer request transmitted by the communication network;
- means of extracting the previous electronic address;
- means of extracting the requested electronic address;
- means of verifying the existence or not of the association of the previous electronic address and the requested electronic address in said table of links;
- means of adding the association in the table of links if said association does not exist in said table of links; and
- means of incrementing a weighting factor associated with said association in the table of links on each reception of a computer request containing said association.

Thus the table of links is created iteratively as a function of the successive requests sent by the users linked to the computer server by the communication network. It is particularly well suited to being associated with a computer server containing a very large volume of documents, for which it would be very expensive in time and storage space, or even unachievable, to pre-establish a table of hypertext links existing between all the stored documents.

In addition, management of this table of links is achieved entirely automatically, without requiring any specific command from the users, since the computer request sent to the computer server contains both the electronic address of the requested document and the electronic address of the document previously requested by the user.

By virtue of the management method and device according to the invention, the table of hypertext links makes it possible to store the movements of the users of the computer server from document to document, and to consolidate the information coming from several users in order to benefit from a mass effect during the interpretation and use of this table of links.

When the table of links is used for example to predict the documents which have the greatest probability of being requested by a user from a previously requested document, any new user of the computer server benefits from the data already available at the table of links established from prior requests sent by other users of the communication network.

The establishment of the table of links also makes it possible to facilitate the management of the computer server, for example in order to know at any time the documents most often consulted, the unused documents which can be eliminated, the access paths most used by the users for consulting a document, etc.

According to an advantageous version of the invention, the management method also includes a step of updating a date of last access associated with the said association in the table of links, the data of last access corresponding to the date of reception of the last computer request containing said association.

The method of managing the table of links thus associates, with the weighting factor, a date of last access which makes it possible to refine the reading and interpretation of this table of links, and in particular to correct for the effect of a relatively high weighting factor when the date of last access is relatively old.

According to another advantageous version of the invention, the management method also includes a step of adding, to said table of links, a creation date associated with said association, the creation date corresponding to the date of reception of the first computer request containing said association.

As before, associating a date of creation of the association with the weighting factor makes it possible to refine the reading and interpretation of this table of links, and in particular to correct the effect of a very small weighting factor when the creation date is relatively recent.

According to a preferred version of the invention, the management method also includes the following steps:
- comparing the number of associations stored in said table of links with a threshold value; and
- eliminating at least one association from said table of links when the number of associations is greater than said threshold value.

By virtue of this threshold value, the management method according to the invention makes it possible to limit the increase in the table of links beyond a certain limit, in order notably to limit the memory space used for storing this table of links. It also guarantees effectiveness in terms of calculation time and complexity of the algorithms used during the utilisation of this table of links (algorithm for predicting the documents which will be requested subsequently, algorithm for extracting the most used paths, etc).

According to an advantageous version of the management method, which makes it possible to achieve the elimination of certain associations in the table of links in a relatively simple fashion, the elimination step includes the following substeps:
- selecting, from the table of links, associations associated with the oldest date of last access in said table of links, the date of last access corresponding to the date of reception of the last computer request containing said association;
- comparing the weighting factors associated with said associations selected in order to find the lowest weighting factor; and
- eliminating the association or associations associated with said lowest weighting factor.

According to another preferred version of the invention, the management method also includes a step of extracting information relating to the user and a step of adding said information to the table of links.

Storing such information also makes it possible to refine the reading and use of the table of links, taking into account for example the name of the users, their computer address on the communication network, etc.

According to another aspect of the invention, a method of generating a computer request containing the requested electronic address of a requested document and the previous electronic address of a previously requested document, the requested document being linked by a hypertext link to the previously requested document, includes the following steps:
- sending a computer request containing the requested electronic address of the requested document;
- adding an additional field to said computer request;
- entering, in said additional field, the previous electronic address of the previously requested document; and
- transmitting said computer request to a computer server via a communication network.

Correlatively, a device for generating a computer request containing the requested electronic address of a requested document and the previous electronic address of a previously requested document, the requested document being linked by a hypertext link to the previously requested document, comprises:
- means of sending a computer request containing the requested electronic address of the requested document;
- means of adding an additional field to said computer request;
- means of entering, in said additional field, the previous electronic address of the previously requested document; and
- means of transmitting said computer request to a computer server via a communication network.

This method of generating a supplemented computer request is particularly simple to implement.

It does not require changing the existing document on the computer server, for example in order to store, in each document, all the addresses of the documents pointed to in association with the address of said document, which is expensive in time and memory space occupied.

In addition, this computer request being generated entirely at the level of the user, the latter can decide unilaterally not to supplement the computer request for reasons of confidentiality, only the initial request containing the electronic address of the requested document being transmitted to the computer server.

In an advantageous version of the invention, the generation method also includes a step of entering, in said additional field, information relating to said previously requested document, such as the date and time of reception of the document previously requested by the user.

Best use can thus be made of this supplemented field in order to transmit various information to the computer server.

Moreover, on a communication network, the display of a requested document will take a more or less long time, depending on how busy the communication network is, the speed of the computer link which connects the computer of the user to the network, the speed of the computer link which connects this network to the computer where the requested document is stored, the capacity of and the load on the computer server associated with this computer, the volume of the document requested and the greater or lesser number of documents included in the requested document.

It is essential to accelerate access to the documents by means of the communication network, in order to reduce the waiting times, which are generally greater than ten seconds.

In US patent 5 727 129 (Barrett et al) a document transfer system is known in which there are recorded the successive requests sent by a user during a first sequence, in the following sequences the documents liable to be requested by the user are predicted and these predicted documents are automatically pre-unloaded. If the user actually establishes a request for the predicted document, unloading of the latter from the computer server is finished. This transfer method has a certain number of drawbacks, and notably that of requiring a learning phase at each user in order to reliably predict the documents. In addition, this system is difficult to use in conventional communication networks in which the user cannot receive documents without having previously established a computer request, for reasons of security.

According to another aspect of the invention, an order method and an associated document transfer method make it possible to accelerate the transfer of documents requested by a user via a communication network linked to a computer server.

To this end, a method of ordering, by a user, via a communication network, documents linked by hypertext links and stored on a multiuser computer server, includes the following steps:
- producing a computer request by the user, to request the communication of a document stored on said computer server;
- extracting the electronic address of the requested document;
- verifying whether or not the requested document is stored in a cache memory of the user and transmitting said document to the user if it is stored;
- sending the computer request to the computer server;
- receiving by the user, a computer response containing said requested document and one or more electronic addresses of pointed-to documents linked by a hypertext link to said requested document;
- transmitting the requested document to the user;
- extracting from the computer response the electronic address or addresses of the pointed-to documents;
- sending one or more ancillary computer requests to request the pointed-to documents from the computer server;
- receiving an ancillary computer response containing said pointed-to documents and possibly one or more electronic addresses of additional pointed-to documents linked by a hypertext link to said pointed-to documents; and
- storing said pointed-to documents in the cache memory of the user.

Thus the pointed-to documents are transferred and stored in memory in advance, after the sending of ancillary requests which make it possible to dispense with the conventional security devices which prevent the unwanted transfer of documents to the user.

The invention also concerns, in association with the ordering method, a method of transferring documents by means of a multiuser computer server via a communication network, the computer server cooperating with a table of links containing associations of an electronic address of a first document and an electronic address of a second document linked to the first document by a hypertext link, characterised in that it includes the following steps:
- receiving a computer request sent by a user;
- extracting the electronic address of the requested document;
- selecting, from said table of links, one or more associations of the electronic address of the requested document with respectively one or more electronic addresses of pointed-to documents linked to said requested document by a hypertext link; and
- adding to a computer response containing said requested document the electronic address or addresses of pointed-to documents of the selected associations.

The selection of the pointed-to documents is thus effected at the computer server and can take into account not only the requests of the user during a previous insertion but also the requests of the other users.

The prediction of the documents having the greatest probability of being requested by the user, from a first requested document transferred previously, can be effected more reliably.

The transfer method thus makes it possible to transfer to the user documents in a small number having a high probability of being requested, which best avoids the transfer and storage of unnecessary documents at the level of the user.

This transfer method is particularly well suited to documents including many pointers in respect of which it cannot be physically contemplated transferring and storing in advance all the documents pointed to from this document.

The association of the order method and transfer method in accordance with this aspect of the invention thus makes it possible to accelerate access to documents by a user via a communication network, by storing documents in advance at the user level.

In a preferred embodiment of the invention, the ordering method includes, after the step of extracting the electronic address or addresses of the pointed-to documents, a filtering step in which one or more of said electronic addresses are eliminated.

It is thus possible, at each user and independently of each other, to limit and choose the number of pointed-to documents transferred in advance by the communication network, as a function notably of the available memory space.

This embodiment correlatively allows greater flexibility at the computer server, which can transmit a large number of electronic addresses of documents pointed to in the computer response.

According to a preferred version of the invention, the ordering method also includes a step of comparing the volume of documents stored in said cache memory with a threshold value, the steps of extracting, sending ancillary computer requests, receiving an ancillary computer response, storing, and possibly filtering and comparing, being reiterated in order to store said additional pointed-to documents as long as the volume of documents stored in the said cache memory is less than said threshold value.

It is thus possible to store in advance many documents liable to be requested subsequently by the user whatever their place in the tree formed by the documents linked to each other by hypertext links from the document requested initially by the user.

According to one advantageous version of the invention, the ordering method also includes the following step:
- adding an additional field to said computer request, said additional field containing the previous electronic address of the document previously requested by the user.

This characteristic, which can be optional at the level of each user for reasons of confidentiality, makes it possible to send information to the computer server which is adapted to enrich the table of links between documents linked by a pointer. It thus makes it possible to refine the selection of the documents stored in advance according to the transfer and ordering methods according to the invention for a subsequent session of interrogation of the computer server by the same or another user.

According to another preferred version of the invention, the selection step of the transfer method includes the following substep:
- extracting from the table of links associations of the electronic address of the requested document with respectively electronic addresses of pointed-to documents linked to said requested document by a hypertext link;
- comparing weighting factors associated with said extracted associations; and
- selecting a subset of associations of the highest weighting factors.

It is thus possible to select a subset of pointed-to documents amongst all the pointed-to documents in an initial document, the weighting factor associated with each association representing for example the number of times the pointed-to document has been requested from the initial document by one or more users.

Advantageously, and in order to avoid, in certain cases, an excessive transfer of documents in the direction of the user, the transfer method also includes a truncation step in which one or more associations of the subset of associations are eliminated when the number of associations of the subset is greater than a predetermined threshold value.

According to a preferred characteristic of the invention, the addition step of the transfer method includes a step of creating one or more additional fields in the computer response and a step of entering the electronic address or addresses of pointed-to documents of the selected associations in the additional field or fields.

The electronic addresses incorporated in the computer response are thus introduced into additional fields, without interfering with the conventional fields which make it possible to communicate the requested document to the user.

Correlatively, the invention also concerns a device for ordering by a user, via a communication network, documents linked by hypertext links and stored on a multiuser computer server, comprising:
- means of producing a computer request by the user, to request the communication of a document stored on said computer server;
- means of extracting the electronic address of the requested document;
- means of verifying whether or not the requested document is stored in a cache memory of the user;
- means of transmitting said document to the user;
- means of sending the computer request to the computer server;
- means of receiving, by the user, a computer response containing said requested document and one or more electronic addresses of pointed-to documents linked by a hypertext link to said requested document;
- means of extracting from the computer response the electronic address or addresses of the pointed-to documents;
- means of sending one or more ancillary computer requests to request the pointed-to document or documents from the computer server;
- means of receiving an ancillary computer response containing said pointed-to documents and possibly one or more electronic addresses of additional pointed-to documents linked by a hypertext link to said pointed-to documents; and
- means of storing said pointed-to documents in the cache memory of the user.

This ordering device makes it possible to implement the ordering method according to the invention and has advantages similar to those described previously.

Likewise, the invention also concerns a device for transferring documents by means of a multiuser computer server via a communication network, the computer server cooperating with a table of links containing associations of an electronic address of a first document and an electronic address of a second document linked to said first document by a hypertext link, comprising:
- means of receiving a computer request sent by a user;
- means of extracting the electronic address of the requested document;
- means of selecting, from said table of links, one or more associations of the electronic address of the requested document with respectively one or more electronic addresses of pointed-to documents linked to said requested document by a hypertext link; and
- means of adding to a computer response containing said requested document the electronic address or addresses of pointed-to documents of the selected associations.

This transfer device makes it possible to implement the transfer method according to the invention and has advantages similar to those described previously.

The invention also relates to a computer having means adapted to implement the management method or having a management device, as disclosed above.

It also relates to a computer having means adapted to implement the generation method or having a generation device, as disclosed above.

The invention also relates to a computer having means adapted to implement the ordering method or having an ordering device, as disclosed above.

It also relates to a computer having means adapted to implement the transfer method or having a transfer device, as disclosed above.

The invention also relates to a communication network having means adapted to implement the management method or having a management device, as disclosed above.

It also relates to a communication network having means adapted to implement the generation method or having a generation device, as disclosed above.

The invention also concerns a communication network having means adapted to implement the ordering method or having an ordering device, as disclosed above.

It also relates to a communication network having means adapted to implement the transfer method or having a transfer device, as disclosed above.

It also relates to a computer server having means adapted to implement the management method or having a management device, as disclosed above, or alternatively a computer server connected to a communication network by means of a computer having means adapted to implement the management method or having a management device, as disclosed above.

It also relates to a computer server having means adapted to implement the ordering or transfer method or having a ordering or transfer device as disclosed above, or alternatively a computer server connected to a communication network by means of a computer having means adapted to implement the ordering or transfer method or having a ordering or transfer device as disclosed above.

In a particularly advantageous embodiment of the invention, the aforementioned computer server is connected to several users by a Worldwide Area Network or WAN.

The advantages of the aforementioned computer, communication network and computer servers are identical to those previously disclosed in relation to the management, generation, transfer and ordering methods according to the invention.

The present invention also relates to an information storage means, which can be read by a computer or a microprocessor, possibly removable, storing program instructions adapted to implement the management method and/or the generation method and/or the transfer method and/or the ordering method according to the invention.

Other particularities and advantages of the invention will also emerge from the following description of a particular embodiment of the invention.

In the accompanying drawings, given by way of non-limitative examples:
- Figure 1 is a block diagram illustrating an overall view of a communication network adapted to implement the management, ordering and transfer methods according to the invention;
- Figure 2 is a schematic representation of a set of documents linked by hypertext links;
- Figure 3 is a block diagram illustrating a management device according to one embodiment of the invention;
- Figure 4 is a block diagram detailing the elimination means illustrated in Figure 3;
- Figure 5 is a block diagram illustrating an ordering device according to one embodiment of the invention;
- Figure 6 is a block diagram illustrating a transfer device according to one embodiment of the invention;
- Figure 7 is a block diagram illustrating a computer adapted to implement the management or generation or ordering or transfer methods according to the invention;
- Figure 8 is a representation of an example of a table of links managed by the management method and used by the transfer method according to the invention;
- Figure 9 is a flow diagram illustrating the management method according to one embodiment of the invention;
- Figure 10 is a flow diagram detailing the elimination step of the flow diagram illustrated in Figure 9;
- Figure 11 is a block diagram illustrating a generation device according to one embodiment of the invention;
- Figure 12 is a flow diagram illustrating the generation method according to the invention;
- Figure 13 is a flow diagram illustrating the ordering method according to one embodiment of the invention; and
- Figure 14 is a flow diagram illustrating the transfer method according to one embodiment of the invention.

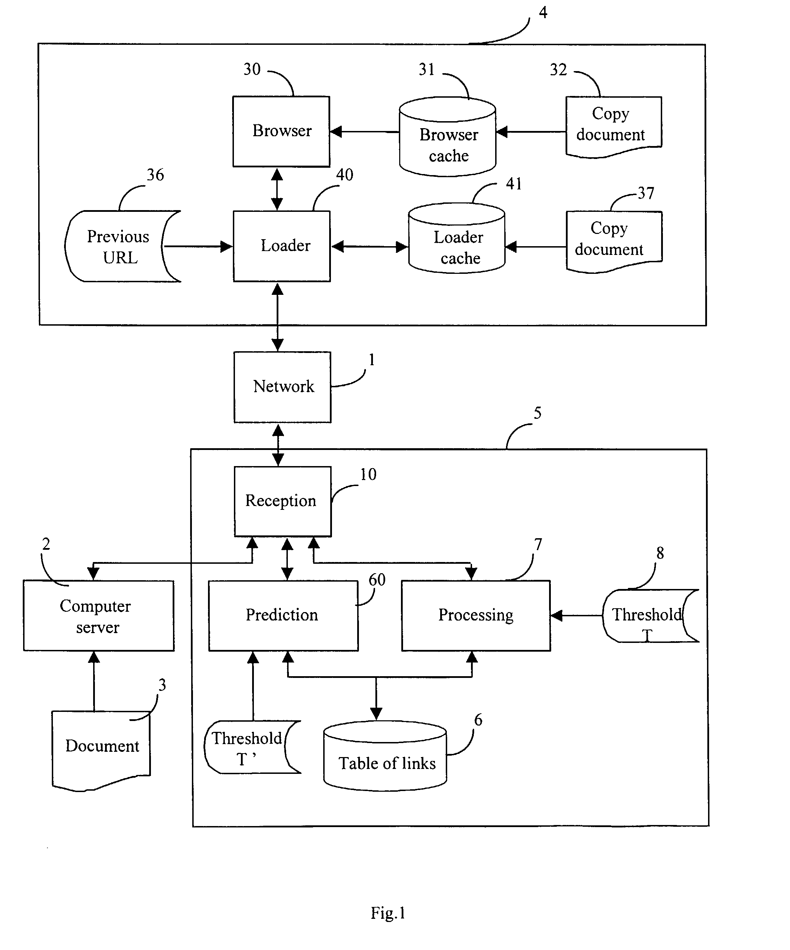

The overall structure of the communication network into which the management, ordering and document transfer methods according to the invention can be introduced will now be described with reference to Figure 1.

This network 1 is for example a worldwide communication network, such as the Internet, constructed on top of a communication protocol enabling the computers connecting to the communication network to exchange documents.

These documents are stored at a computer server 2 capable of recovering a document from the memory 3 and serving it by means of the communication network 1 to a user 4.

Although only a computer server 2 and a user 4 are illustrated for reasons of simplification in Figure 1, the communication network 1 is in general connected to numerous computer servers 2 and numerous users 4.

It is also necessary to state that, throughout the remainder of the description, the concept of user is employed to designate a computer system such as a computer adapted to establish computer requests in order to order a document stored on a computer server and that the latter is adapted to respond to this computer request. On the scale of a communication network, one and the same computer system such as a computer can alternatively be considered to be a user of the communication network (also referred to as a client), or as a computer server.

An information system, where the information is stored in documents (texts, images, sounds etc) is constructed on top of the communication network.

In the present invention, this information system is a hypertext system so that the stored documents have hypertext links linking certain documents together. In other words, documents have pointers pointing to other documents and the user can request the transmission of these other documents by actuating the pointers in the initial document.

In practice, when the initial document is displayed by the user, the hypertext links are represented in the form of an icon or a word for example, the user being able to request the associated documents by clicking, by means of a mouse, for example, on the word or icon chosen. A browser associated with the user includes a computer program adapted to generate a particular request containing the address of the document associated with the pointer.

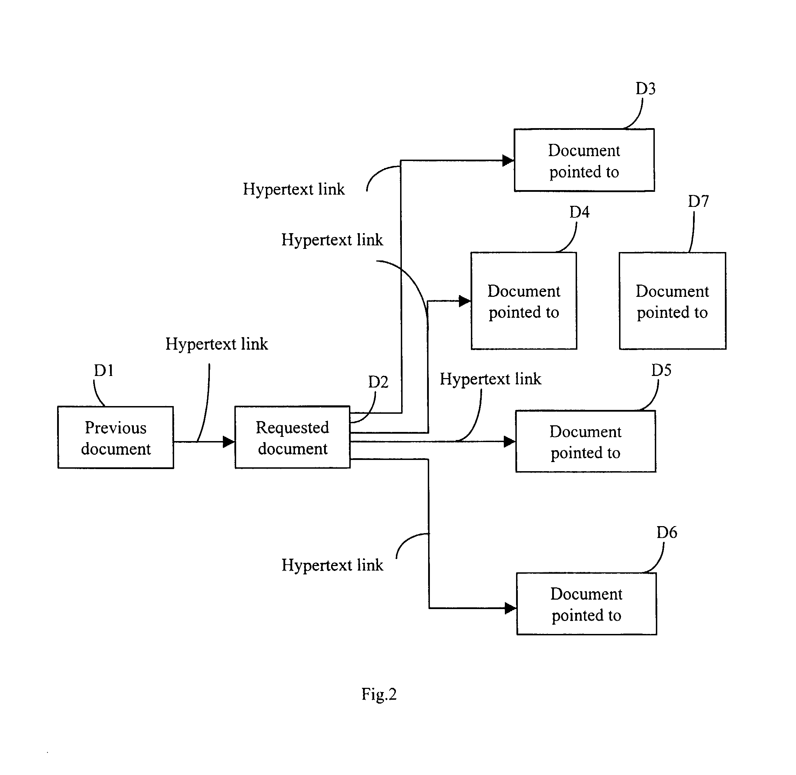

A simplified example of a hypertext system, intended solely to give an idea for the remainder of the disclosure of one example embodiment of the present invention, is illustrated in Figure 2.

A document D2, referred to as the requested document, is requested by the user, by actuating a pointer, from a document D1, referred to as the prior document, this requested document D2 being able in its turn to contain hypertext links of several other documents D3, D4, D5 and D6, referred to as pointed-to documents. By way of example, the document D4 contains in its turn a hypertext link with another pointed-to document D7.

An example of a hypertext system built on the internet communication network is the WWW (World Wide Web) system, where the communication protocol used can able by way of example be the HyperText Transfer Protocol (HTTP).

Each document D1 to D7 has respectively an electronic address URL1 to URL7 (Uniform Resource Locator) making it possible to locate each document in the hypertext system.

The user 4 is then adapted to establish an HTTP computer request in order to request the communication of a document D2 from the computer server 2 via the communication network 1.

To implement the management method according to the invention, this computer request contains the requested electronic address URL2 of the requested document D2 and the previous electronic address URL1 of the previous document D1, requested previously by the user 2.

The generation of this computer request is explained in detail below in the description according to another aspect of the invention.

This computer request is transmitted by the communication network 1 to a device 5 for managing a table of hypertext links 6.

In accordance with the invention, this management device 5 has means 10 of receiving the computer request transmitted by the communication network 1.

These reception means 10 transmit on the one hand the computer request to the computer server 2 proper so that the latter processes this computer request conventionally in order to supply the requested document D2.

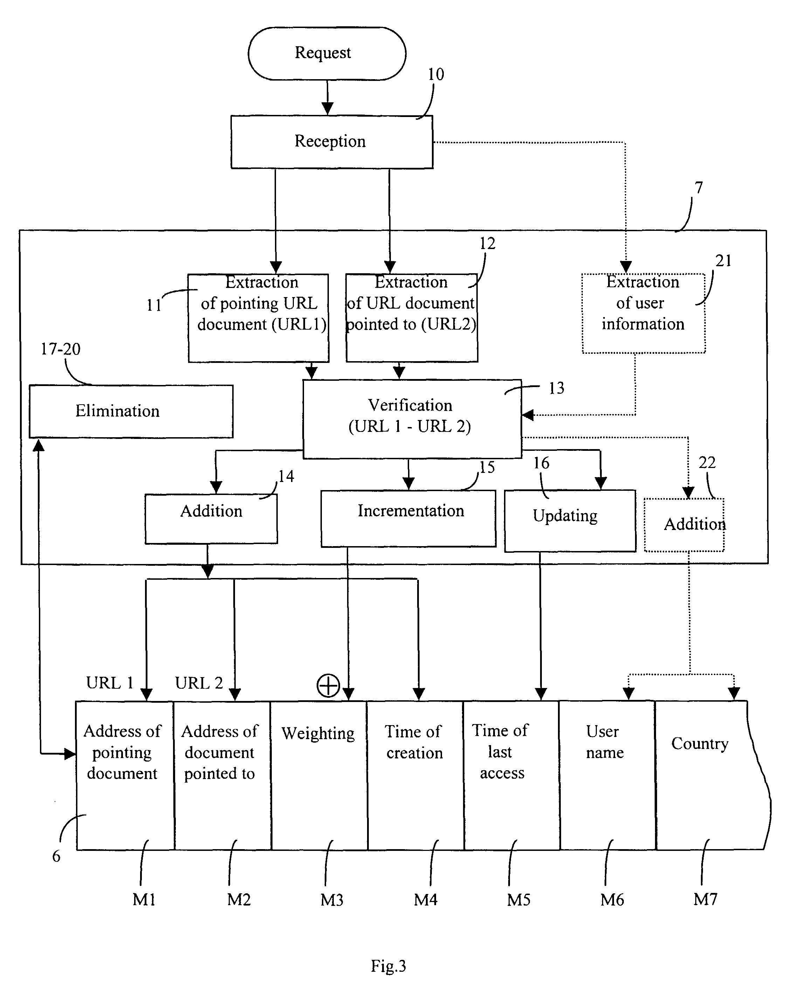

Moreover, and directly in connection with the present invention, the computer request is transmitted to a series of means of the management device detailed in Figure 3, and represented diagrammatically in Figure 1 by the processing unit 7.

This series of means include, in accordance with this aspect of the invention:
- means 11 of extracting the previous electronic address URL1 ;
- means 12 of extracting the requested electronic address URL2;
- means 13 of verifying the existence or not of the association URL1-URL2 of the previous electronic address and the requested electronic address in the said table of links 6;
- means 14 of adding the association URL1-URL2 in the table of links 6 if this association does not exist in the table of links 6; and
- means 15 of incrementing a weighting factor associated with the association URL1-URL2 in the table of links 6 on each reception of a computer request containing this association URL1-URL2.

The table of links 6 is incorporated in a memory containing several registers adapted to record variables modified during the running of the management program. It contains principally registers M1 and M2 for storing the associated addresses URL1, URL2 of a document D1 having a pointer pointed to another document D2, and a register M3 storing the weighting factor incremented at each new reception of a computer request containing this association.

In the example embodiment described, non-limitatively, the management device also has means 16 of updating a last-access date associated with the association URL1-URL2 in the table of links 6, the last-access date corresponding to the date of reception of the last computer request containing this association.

The table of links 6 also contains a register M5 for storing this last-access date.

In a similar manner, and also by way of non-limitative example, the table of links 6 also has means 14 of adding a creation date associated with the association URL1-URL2, the date of creation corresponding to the date of reception of the first computer request containing this association.

The table of links 6 also contains a register M4 for storing this date of creation.

The advantage of the storage in the table of links 6 of the last-access date and the date of creation associated with each association of electronic addresses will be better understood in the light of the following explanation of the management method.

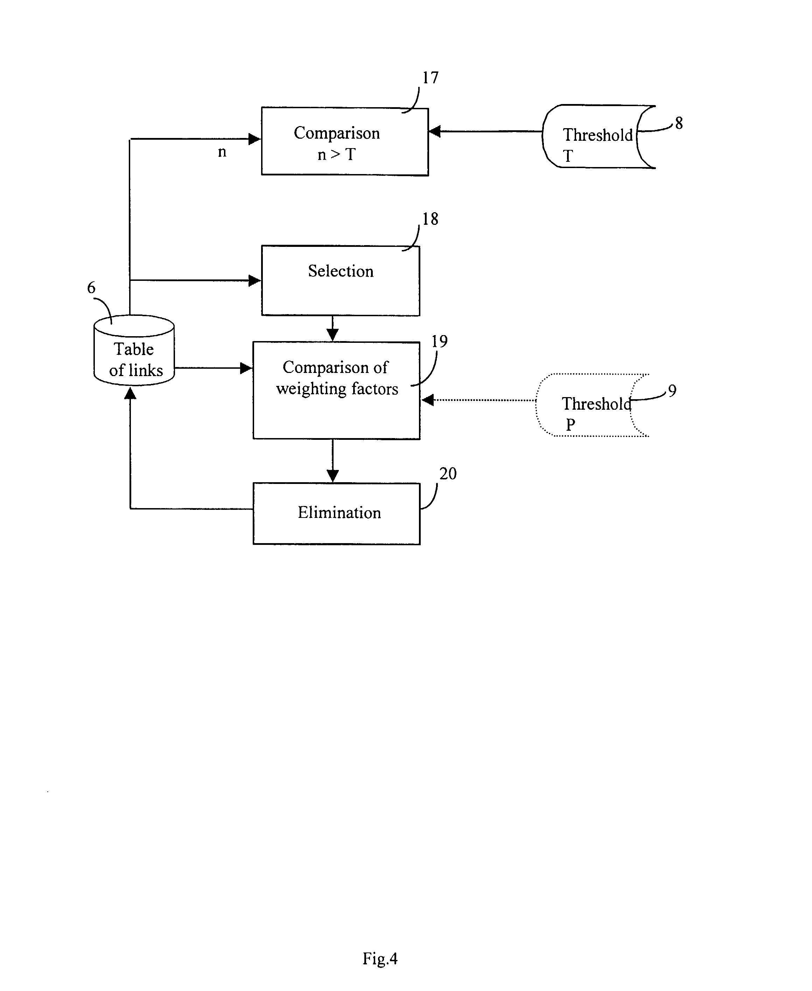

In a particularly preferred embodiment of the invention, and as illustrated in detail in Figure 4, the management device comprises:
- means 17 of comparing the number n of associations stored in said table of links 6 with a threshold value T; and
- means 18, 19, 20 of eliminating at least one association from this table of links 6 when the number n of associations is greater than the threshold value T.

In a conventional fashion, storage means 8 are adapted to store this threshold value T, which can optionally be modified.

By way of a non-limitative embodiment, the elimination means include:
- means 18 of selecting, in the table of links 6, associations associated with the oldest last-access date in this table of links;
- means 19 of comparing the weighting factors associated with the selected associations in order to find the lowest weighting factor; and
- means 20 of eliminating the association or associations associated with said lowest weighting factor.

The size of the table of links 6 is thus limited to a maximum number n of associations of electronic addresses, in order to limit the cost of the storage of such a table of links 6.

Alternatively, the means 19 of comparing the weighting factors can optionally be associated with means 9 of storing a threshold value P, the comparison means being adapted to compare the weighting factors with this threshold value P and the elimination means 20 being adapted to eliminate the association or associations whose associated weighting factor is less than this threshold value P.

As illustrated in Figure 3, in a preferred embodiment of the invention, the management device also has means 21 of extracting information relating to the user and means 22 of adding this information to the table of links 6. This information is extracted from the computer request transmitted by the communication network 1 and can consist for example of the name of the user, his address on the communication network, his country of origin etc.

The table of links 6 contains for this purpose additional registers M6, M7 for storing this information.

Returning to Figure 1, the user 4 has in a conventional fashion a browser 30 generally associated with a cache memory 31 adapted to store documents.

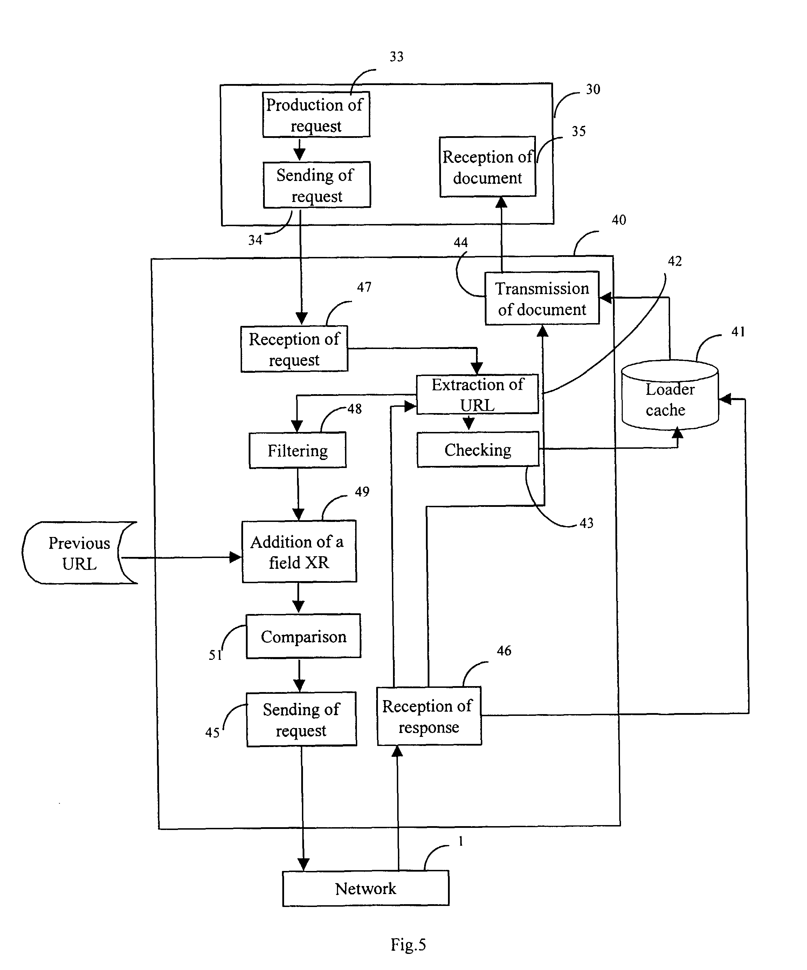

The browser 30 has, as illustrated in Figure 5, means 33 of producing a computer request in order to request communication of a document D2, stored on the computer server 2.

The browser 30 also has means 34 of sending the request and conventional means 35 of receiving the requested document which cooperate with an intermediate or proxy server 40 disposed between the browser 30 and the network 1, referred to in the remainder of the description as a loader 40.

This loader 40 also has a cache memory 41 adapted to store documents to be supplied to the browser 30 in response to a computer request.

As illustrated in Figure 5, and in accordance with a second aspect of the invention, an ordering device has the following means, integrated into the loader 40:
- means 42 of extracting the electronic address URL2 of the requested document D2;
- means 43 of verifying the storage or not of the requested document D2 in the cache memory 41 of the loader 40;
- means 44 of transmitting the document D2 to the browser 30;
- means 45 of sending the computer request to the computer server 2;
- means 46 of receiving a computer response containing the requested document D2 and one or more electronic addresses of pointed-to documents linked by a hypertext link to the requested document D2. Here the electronic response can, for example, contain the electronic addresses URL3, URL4 of the documents D3 and D4;
- means 42 of extracting from the computer response the electronic address or addresses of the pointed-to documents, that is to say in this example the addresses URL3, URL4. These extraction means 42 are in this example identical to the extraction means 42 adapted to extract the electronic address URL2 of the document D2 requested by the user 4;
- means 45 of sending one or more ancillary computer requests in order to request from the computer server the pointed-to document or documents, here D3 and D4. The sending means 45 are in this example identical to the means 45 of sending the principal computer request sent to request the document D2;
- means 46 of receiving an ancillary computer response containing the pointed-to documents D3 and D4 and optionally one or more electronic addresses of additional pointed-to documents linked by a hypertext link to the pointed-to documents D3 and D4. This ancillary computer response can contain for example the address URL7 of the pointed-to document D7 linked by a hypertext link to the document D4. These reception means 46 are in general identical to the previously mentioned means of receiving the computer response; and
- means 41 of storing the pointed-to documents D3, D4 which correspond to the cache memory 41 of the loader 40.

The loader 40 also has, in a conventional fashion, means 47 of receiving a computer request sent by the sending means 34 of the browser 30.

In accordance with a preferred embodiment of the invention, the ordering device has filtering means 48 adapted to eliminate one or more electronic addresses of the pointed-to documents.

It also has means 51 of comparing the volume of documents stored in the cache memory with a threshold value. It is thus possible to know the memory space available for storing documents in the cache memory 41.

It also has means 49 of adding an additional field XR to the computer request adapted to contain the previous electronic address of the document previously requested by the user 4, that is to say here the electronic address URL1 of the document D1.

This filtering 48, adding 49 and comparing 51 means are also integrated in the loader 40.

The computer requests sent by the sending means 45 of the loader 40 are transmitted by the communication network 1 to the computer server 2, which cooperates with a table of links 6 containing associations of an electronic address of a first document and an electronic address of a second document linked to the first document by a hypertext link as described previously with reference to Figure 3.

The processing means 7 make it possible to create and manage this table of links from computer requests in which an additional field XR as described previously has been added.

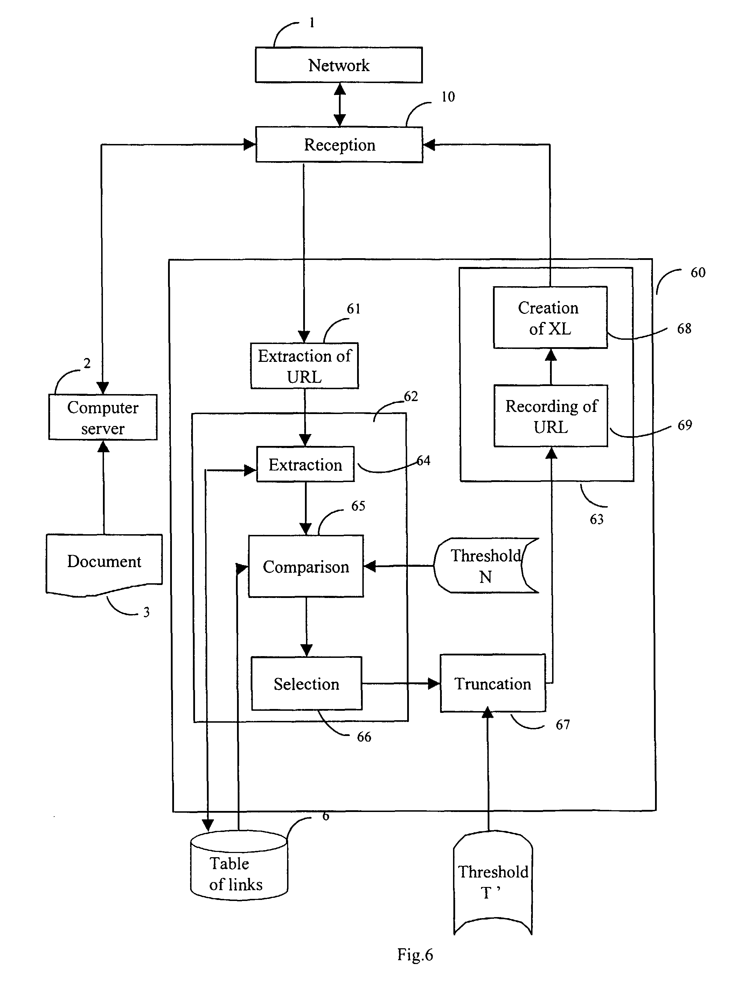

A document transfer device according to a third aspect of the invention has, as illustrated in Figure 6, means 10 of receiving a computer request sent by a user. These receiving means 10 transmit on the one hand the computer request to the computer server 3 proper so that the latter processes this computer request in a conventional fashion in order to supply the requested document.

In addition, and directly in connection with the present invention, the computer request is transmitted to a series of means of the transfer device, detailed in Figure 6, and represented diagrammatically in Figure 1 by the prediction block 60.

These predictions 60 include:
- means 61 of extracting the electronic address URL of the requested document;
- means 62 of selecting from the table of links 6 one or more associations of the electronic address of the requested document with respectively one or more electronic addresses of pointed-to documents linked to the requested document by a hypertext link, for example the addresses URL3, URL4 of the documents D3 and D4 when the requested document is the document D2 with the electronic address URL2 or the address URL7 of the document D7 when the requested document is the document D4 with electronic address URL4;
- means 63 of adding, to a computer response containing the requested document D2 or D4, the electronic address or addresses of the pointed-to documents of the selected associations, here URL3 and URL4 or URL7.

In a preferred embodiment, the selection means 62 include:
- means 64 of extracting the associations of the electronic address of the document requested with respectively electronic addresses of pointed-to documents linked to the requested document by a hypertext link;
- means 65 of comparing weighting factors associated with the extracted associations; and
- selection means 66 for selecting a subset of associations of the highest weighting factors.

The comparison means 65 can cooperate for example with a threshold value M and be adapted to compare the weighting factors with this threshold value M in order to select only the associations for which the weighting factor is greater than this threshold value N.

It also has truncation means 67 adapted to eliminate one or more associations of the subset of associations when the number of associations of the subset is greater than a predetermined threshold value T'.

Moreover, the addition means 63 include means 68 of creating one or more additional fields XL in the computer response and means 69 of entering the electronic address or addresses of pointed-to documents of the associations selected in the additional field or fields.

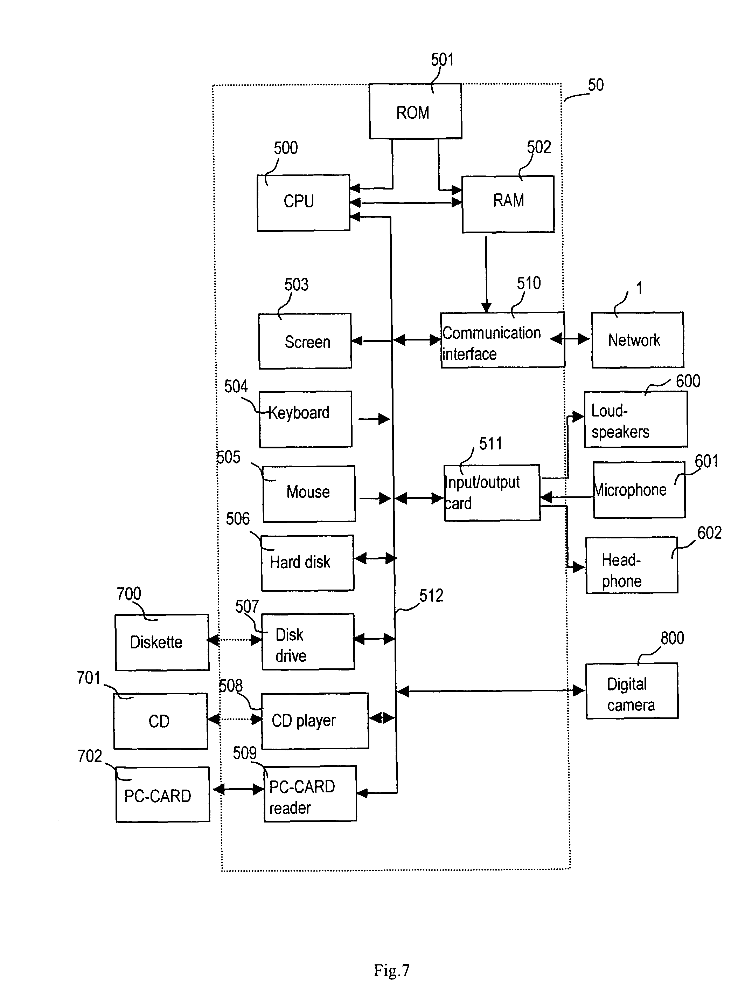

As illustrated in Figure 7, the management device 5 as described above, the ordering device on the one hand and the transfer device on the other hand can be incorporated in a microprocessor 500, the read only memory 501 comprising a program for managing the table of links 6, ordering or transferring documents, and a random access memory 502 containing registers adapted to record variables modified during the running of the program.

This microprocessor 500 is integrated into a computer 50, which can be connected to different peripherals, for example a digital camera 800 or a microphone 601, a headset 602 or a loudspeaker 600 by means of an input/output card 511 in order to receive and store documents.

This computer 50 has a communication interface 510 connected to the communication network 1 in order to receive or send computer requests and transfer or receive documents.

The computer 50 also has document storage means, such as a hard disk 506, or is adapted to cooperate by means of a disk drive 507, a compact disc player 508 or a computer card reader 509 with removable document storage means, respectively diskettes 700, compact discs (CDs) 701 or computer cards (PC CARDS) 702.

These fixed or removable storage means can also contain the code of the management and/or ordering and/or transfer method according to the invention, which, once read by the microprocessor 500, will be stored in the hard disk 506.

As a variant, the program enabling the management device to implement the invention can be stored in the read only memory (ROM) 501.

As a second variant, the program can be received in order to be stored as described previously by means of the communication network 1.

The computer 50 also has a screen 503 making it possible for example to serve as an interface with an operator, who will be able to consult the table of links by means of the keyboard 504 or the mouse 505 or any other means.

The central unit 500 (CPU) will execute the instructions relating to the implementation of the invention. On powering up, the programs and methods relating to the invention stored in a non-volatile memory, for example the read only memory 501, are transferred into the random access memory 502 (RAM), which will then contain the executable code of the invention as well as the variables necessary for implementing the invention.

The communication bus 512 affords communication between the different sub-elements of the computer 50 or connected to it. The representation of the bus 512 is not limitative, and notably the microprocessor 500 is able to communicate instructions to any sub-element directly or by means of another sub-element.

The management device 5 or transfer device can be incorporated in a microprocessor different from the one in which the computer server 2 proper is incorporated with all the stored documents 3.

It can thus be added between one or more computer servers 2 and the communication network 1, as are added, in a conventional fashion, the intermediate servers in the communication networks.

Alternatively, the management device 5 or transfer device can be incorporated directly in the microprocessor incorporating the computer server 2.

A description will now be given of the management method implemented by the management device described above.

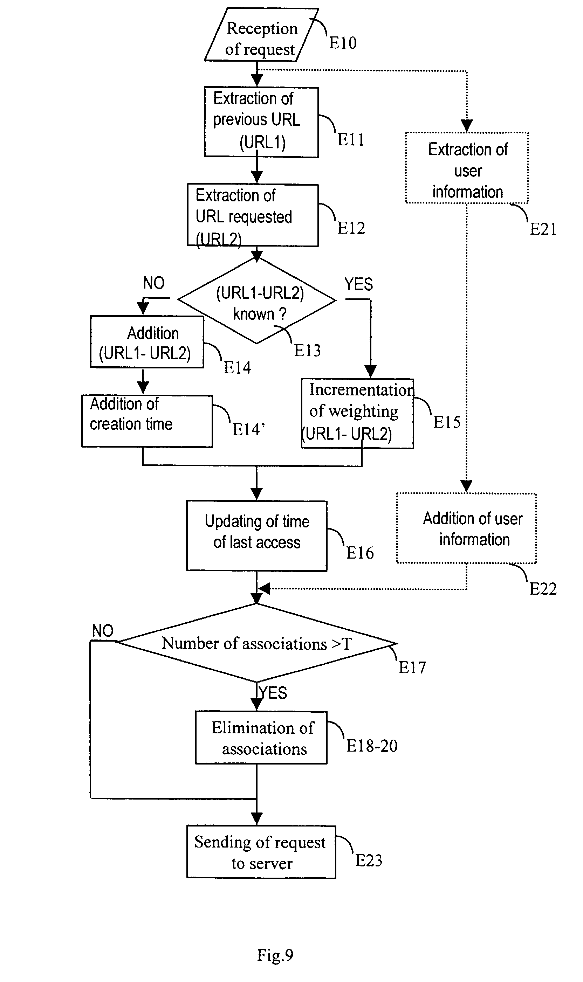

With reference to Figure 9, this method of managing a table of links comprises the following steps:
- reception E10 of a computer request transmitted by the communication network 1;
- extraction E11 of the previous electronic address URL1 ;
- extraction E12 of the requested electronic address URL2;
- verification E13 of the existence or not of the association URL1-URL2 of the previous electronic address and the requested electronic address in the table of links 6;
- addition E14 of the association URL1-URL2 in the table of links 6 if this association does not exist in the table of links 6; and
- incrementation E15 of a weighting factor associated with the association URL1-URL2 in the table of links 6 each time a computer request containing this association is received.

The table of links 6 is thus created iteratively, the weighting factor consisting for example of an integer number increased by one unit each time a computer request containing the association with which it is associated is received.

The management method also includes a step E16 of updating a last-access date associated with the association URL1-URL2 in the table of links 6, the last access date correspond to the date of reception of the last computer request containing this association.

It also includes a step E14' of adding to the table of links 6 a date of creation associated with the association URL1-URL2, the date of creation corresponding to the date of reception of the first computer request containing this association.

Storing this last-access date and this date of creation makes it possible notably to implement an algorithm for eliminating certain little used associations.

To this end, the management method also includes the following steps:
- comparison E17 of the number n of associations stored in the table of links 7 with a threshold value T; and
- elimination E18-20 of at least one association of the table of links 6 when the number n of associations is greater than the threshold value T.

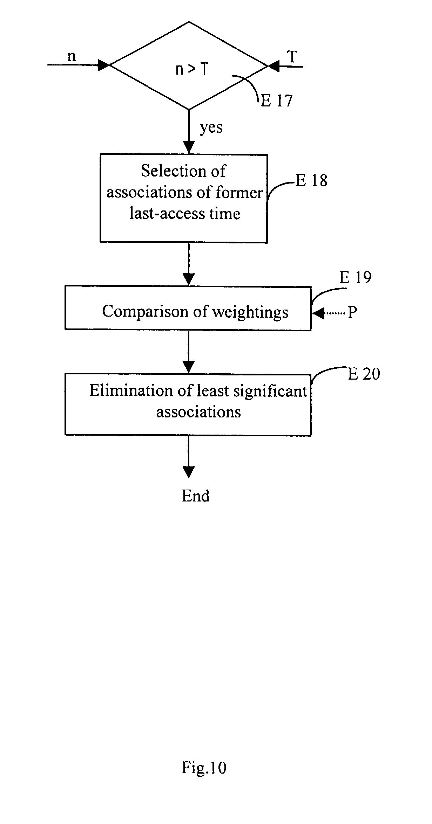

In order to achieve this elimination, the following substeps are preferably implemented as illustrated in Figure 10:
- selection E18 in the table of links 6 of the associations associated with the oldest last-access date in the table of links 6;
- comparison E19 of the weighting factors associated with the selected associations in order to find the lowest weighting factor; and
- elimination E20 of the association or associations associated with the lowest weighting factor.

Alternatively, it is also possible, at the comparison step E19, to compare the weighting factors associated with the selected associations with a threshold value P and to eliminate the association or associations with a weighting factor lower than this threshold value P.

The management method also includes a step E21 of extracting information relating to the user and a step E22 of adding information to the table of links 6.

The request is then sent, in a step E23, to the server 2 and is processed conventionally in order to extract the requested document and send it to the user 4.

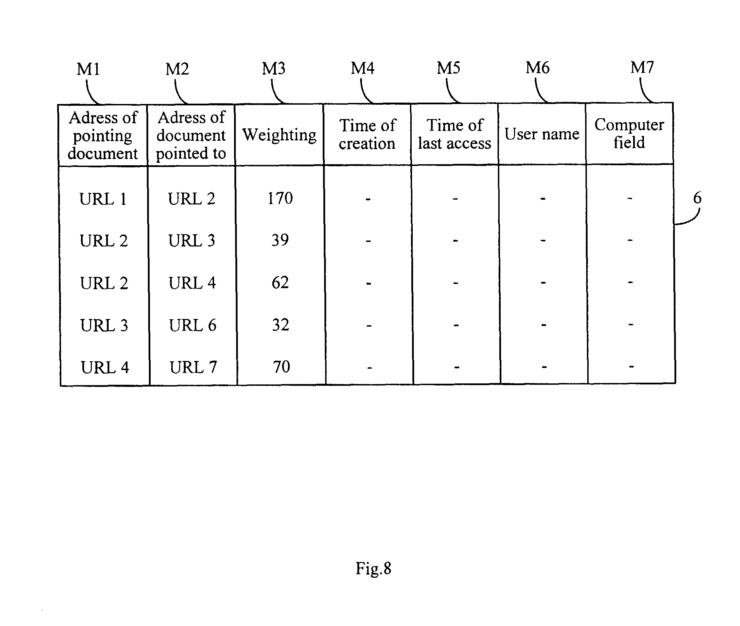

A table of links 6 as illustrated non-limitatively in Figure 8 is then obtained. It includes in this example five associations URL1-URL2, URL2-URL3, URL2-URL4, URL2-URL6 and URL4-URL7 each associated with a weighting factor representing the number of times a user has requested the document D2 using a pointer included in the document D1, the documents D3, D4 and D6 using pointers included in the document D2, and the document D7 using a pointer included in the document D4.

It will be noted that, by virtue of the invention, whereas the document D2 also points to a document D5 as illustrated in Figure 2, the table of links 6 does not contain any associations URL2-URL5 since no user of the computer network 1 has requested transferring this document D5 using the pointer included in the document D2.

The table of links 6 also stores in memory M4 the date of creation of each association in the table of links 6, in memory M5 the date of last access to this association, and in memory M6 and M7 the name and computer field of the users who sent a computer request containing the association.

The device and method for managing the table of links 6 according to the invention thus make it possible to have available data which can easily be used at the computer server 2, reflecting the behaviour of all the users 4 of the computer network 1.

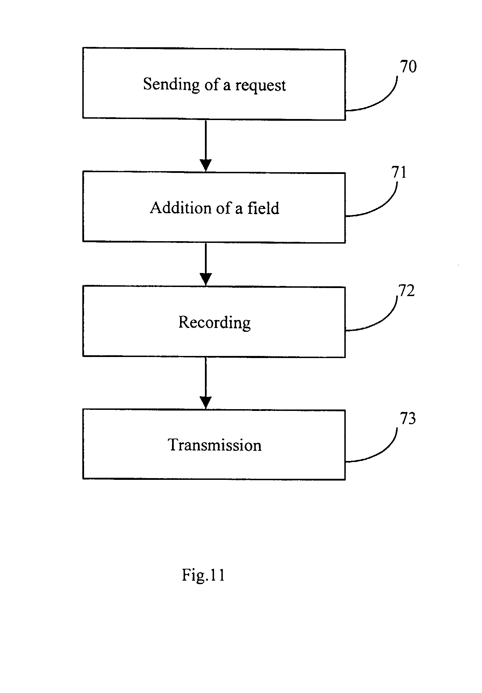

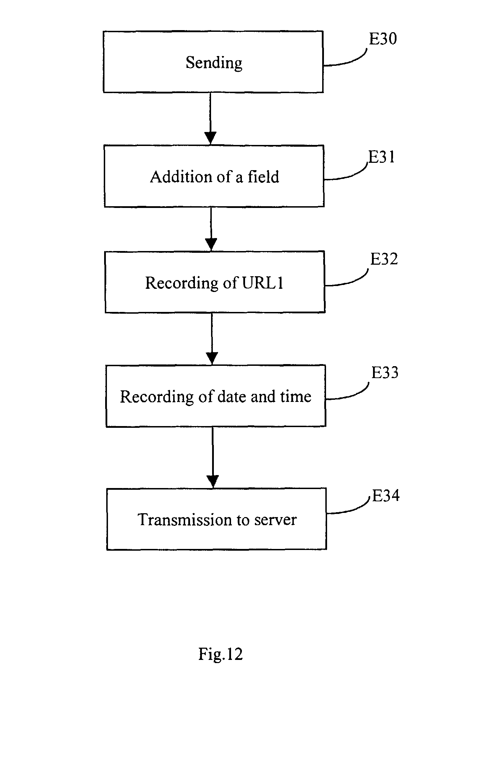

With reference to Figures 11 and 12, a description will be given of another aspect of the invention which makes it possible to generate a complex computer request which can be used by the management method described above.

The generation device as illustrated in Figure 11 has:
- means 70 of sending a computer request containing the requested electronic address URL2 of the requested document D2;
- means 71 of adding an additional field to said computer request;
- entry means 72 adapted to enter in the addition field the previous electronic address URL1 of the previously requested document D1 ; and
- means 73 of transmitting the computer request thus supplemented to the computer server 2 via the communication network 1.

The entry means 72 are adapted also to enter in the additional field information relating to the previously requested document D1, such as the date and time of reception of the document D1 previously requested by the user.

The sending means 70 are integrated in a conventional manner in the browser 30 illustrated in Figure 1, whilst the means of addition 71, entry 72 and transmission 73 are incorporated in the loader 40.

The browser 30 is associated with the cache memory 31 in order to store the copy of documents 32 transmitted by the computer server 2.

The user 4 will establish in a conventional manner, by virtue of the browser 30, a computer request containing the electronic address URL2 of the requested document D2.

This browser 30 cooperates with the loader 40, also associated with a cache memory 41 adapted to store documents 37.

This loader 40 supplements the computer request transmitted by the browser 30 in order to add to it the electronic address URL1 of the previous document D1, this electronic address URL1 being stored in a memory 36 provided for this purpose.

The generation device can be incorporated in a microprocessor 500 as illustrated in Figure 7, a read only memory 501 comprising a program for generating said computer request, and a random access memory 502 containing registers adapted to record variables modified during the running of the program.

The method of generating a computer request as illustrated in Figure 12 includes the following steps:
- sending E30 a computer request containing the requested electronic address URL2 of the requested document D2;
- adding E31 an additional field to said computer request;
- entering E32 in the additional field the previous electronic address URL1 of the previously requested document D1 ; and
- transmitting E34 said computer request to the computer server 2 via the communication network 1.

The generation method also includes a step E33 of entering in the additional field information relating to said previously requested document D1, such as the date and time of reception of the document D1 previously requested by the user.

Thus a complex request is formulated, making it possible to implement the method of managing the table of links at the computer server as previously described.

A description will now be given of the functioning of the ordering and transfer device for implementing the ordering and transfer methods according to the invention.

In the example which follows, and non-limitatively, use will be made of the example of the table of links illustrated in Figure 8.

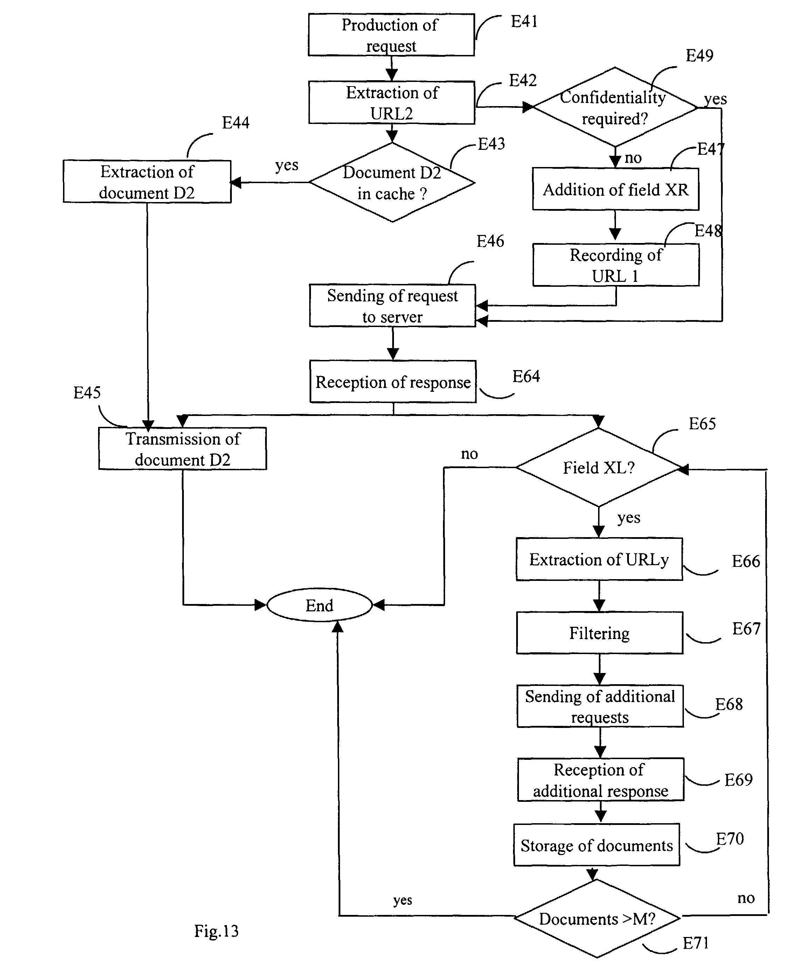

As illustrated in Figure 13, the method of ordering, by the user 4, a document D2, includes first of all a step E41 of producing a computer request by the user 4, in order to request the communication of the document D2 stored on the computer server 2.

In this example, the request thus produced by the browser 30 is transmitted to the loader 40.

According to the invention, the ordering method next includes a step E42 of extracting the electronic address URL2 of the requested document D2.

It is next verified, in a step E43, whether or not the requested document D2 is stored in the cache memory 41 of the loader 40.

In the affirmative, at a step E44, the document D2 is extracted from the cache memory 41 and is transmitted to the user 4 in a transmission step E45.

In parallel to the steps E43 to E45, the ordering method preferably includes a step E47 of adding an additional field XR to the computer request and a step E48 of entering, in this additional field XR, the previous electronic address URL1 of the document D1 previously requested by the user.

The computer request thus supplemented is next sent to the computer server 2 in a sending step E46.

Preferably, a prior test step E49 verifies whether confidentiality is required at the level of the user. In the affirmative, the computer request is not supplemented with the previous electronic address URL1 but sent as it is to the computer server. Otherwise the second computer request is produced as described previously.

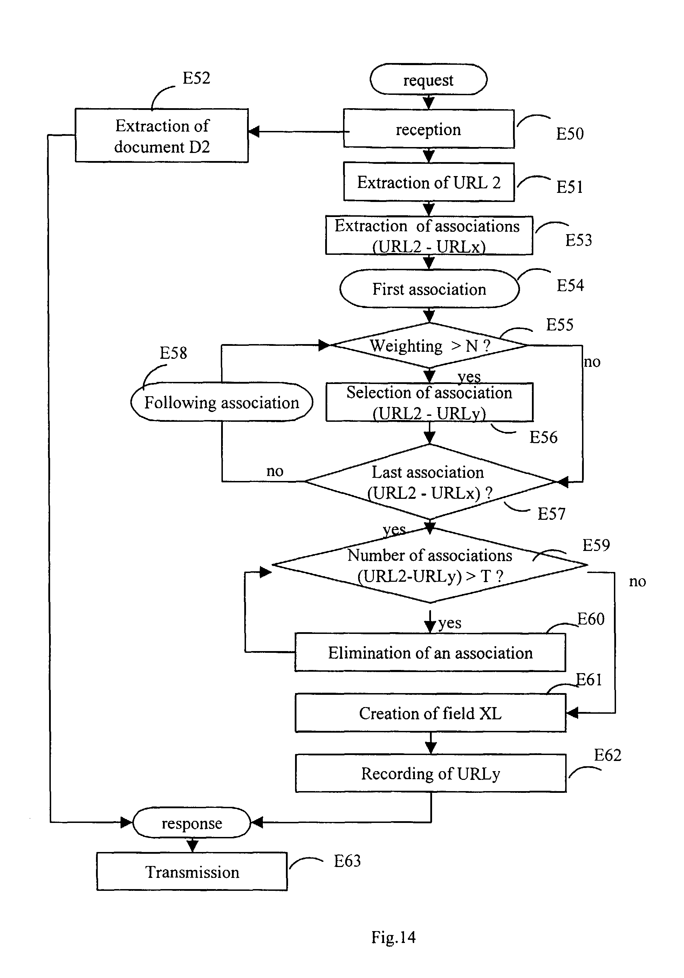

In all cases, whether or not the requested document D2 is stored in the cache memory of the browser 40, the initial or supplemented computer request is sent to the computer server 2 for implementation of the transfer method as described below with reference to Figure 14.

This transfer method includes a step E50 of receiving the computer request sent by the loader 40 of the user 4 and a step E51 of extracting the electronic address URL2 of the requested document D2.

In a conventional fashion, a step E52 of extracting the requested document D2 stored on the server 2 is implemented in order to incorporate the document D2 in a computer response which will then be transmitted to the user 4.

At the same time, a step of selection, from the table of links 6, one or more associations of the electronic address URL2 of the requested document D2 with respectively one or more electronic addresses URLy of pointed-to documents Dy linked to the requested document D2 by a hypertext link is implemented.

In this preferred example embodiment, the step of selecting from the table of links includes first of all a step E53 of extracting, from the table of links 6, associations of the electronic address URL2 of the requested document D2 with respectively electronic addresses URLx of pointed-to documents Dx linked to the requested document D2 by a hypertext link.

In this example, the associations URL2-URL3, URL2-URL4 and URL2-URL6 are extracted.

Next, the weighting factors associated with the extracted associations URL2-URLx are compared in order to select a subset of associations URL2-URLy of the highest weighting factors.

In this example, in a step E54, a first association URL2-URLx is considered, x taking the values here 3, 4 or 6, and, at a comparison step E55, the associated weighting factor is compared with a predetermined reference value N.

If the weight is greater than n, the association URL2-URLy is selected in a selection step E56.

In a test step E57 it is checked whether all the associations URL2-URLx being processed and, in the negative, at step E58 the following association is envisaged and steps E55 to E57 are reiterated.

In this example, with N equal to 35, the associations URL2-URL3 and URL2-URL4 are for example selected.

Preferably the transfer method also includes a truncation step E60 in which one or more associations URL2-URLy of the subset of associations are eliminated when the number of associations of this subset is greater than a predetermined threshold value T'. This characteristic avoids subsequently transferring an excessively large quantity of documents to the user 4.

A test step E59 makes it possible to compare the number of associations URL2-URLy with T' and to eliminate an association if this number is greater than T'.

Steps E59 and E60 are reiterated as long as the number of associations is greater than the threshold value T'.

Finally, in accordance with the invention, the transfer method includes a step of adding to the computer response containing the requested document D2 electronic addresses URL3, URL4 of pointed to documents D3, D4 of the selected associations.

This addition step includes a step E61 of creating one or more additional fields XL in the computer response and a step E62 of entering the electronic address or addresses URLy of pointed-to documents Dy of the selected associations URL2-URLy in the additional field or fields XL.

Here two additional fields XL are added in order to enter the addresses URL3 and URL4 in the computer response.

At the same time as the transfer method according to the invention described above, the processing means 7 described previously are adapted to manage the table of links 6 from the field XR added to the computer request of the user 4.

The computer response produced by the prediction means 6 is then transmitted in a transmission step E63 to the user 4 via the communication network 1 and is received in a reception step E64 by the loader 40 as illustrated in Figure 13.

The requested document D2 is then transmitted to the user in the transmission step E45 of the ordering method.

In a test step E65, it is next checked whether the computer response contains additional fields XL.

If no field XL has been added, for example if the computer server 2 is not associated with a transfer device for implementing the transfer method according to the invention, if the requested document D2 does not contain hypertext links or if no association URL2-URLx is recorded in the table of links, then the ordering process is terminated.

Otherwise it also includes a step E66 of extracting from the computer response the electronic address or addresses of the pointed-to documents, here the addresses URL3 and URL4 of the documents D3 and D4.

The ordering method also preferably includes, after the extraction step E66, a filtering step E67 in which one or more of the electronic addresses URL3, URL4 are eliminated.

This characteristic makes it possible, at the level of the user 4, to limit the number of documents which will be stored subsequently in the cache memory 41 of the loader 40.

The ordering method next includes a step E68 of sending one or more ancillary computer requests for requesting, from the computer server, the pointed-to document or documents, here the documents D3 and D4.

The entire transfer method described above is then reiterated in order to transmit the documents D3 and D4 and possibly select additional pointed-to documents from the table of links 6. Here the selection step E66 of the transfer method makes it possible to select the document D7 whose electronic address URL7 is entered at the entering step E62 in an additional field XL of an ancillary computer response thus containing the pointed-to document D4 and a field XL containing the electronic address URL7 of the additional pointed-to document D7 linked by a hypertext link to the pointed-to document D4.

The pointed-to documents D3 and D4 are thus returned by the computer server 2 to the user 4 in an ancillary computer response and are received in a reception step E69.

The ordering method next includes a step E70 of storing the pointed-to documents D3 and D4 in the cache memory 41 of the loader 40 of the user 4.

Preferably, the ordering method also includes a step E71 of comparing the volume of documents stored in the cache memory 41 with a threshold value M. Thus it is possible to compare the number of documents stored with a threshold value M or the number of bytes occupied by the documents stored compared with the maximum number of bytes M in the cache memory.

If the volume of documents stored in this cache memory 41 is less than the threshold value M, the steps of testing E65, extracting E66, filtering E67, sending E68 ancillary computer requests, receiving E69 an ancillary computer response, storing E70 pointed-to documents and comparing E71 are reiterated.

In this example, when a field XL is present in the ancillary computer response received at step E69, the electronic address URL7 is extracted at step E66 and an ancillary request is sent at step E68 in order to request the document D7. The latter is received at the reception step E69 and is stored in its turn in the cache memory 41.

It will easily be understood that steps E65 to E71 are reiterated as long as the volume of documents stored in the cache memory 41 is less than the predetermined threshold value M.

Naturally, if the ancillary computer response does not contain an additional field XL, the ordering process is terminated.

It will easily be understood that, at the next request established by the user, the requested document has a high probability of being stored in the cache memory 41 of the loader 40 and can be returned without delay to the user 4, the operations of extracting this document from the computer server 2 and of transmission via the communication network 1 having been performed for the user in overlap time, whilst the user is reading the previously requested document.

Thus, by virtue of the transfer and ordering methods according to the invention using the table of links generated by the management method, there is obtained an acceleration in the transmission of documents between a computer server and a user connected by a communication network, such as a worldwide communication network.

The table of links also makes it possible to know the most consulted documents or the most used access paths on the computer network 1, notably in order to manage the computer server 2 and the stored documents 3 on a commercial or advertising level (the establishment, for example, of an amount of advertising royalties according to the data in the table of links).

Naturally, many modifications can be made to the example embodiment described above without departing from the scope of the invention.

In the transfer method according to the invention, in selecting the electronic addresses in the table of links, it is also possible to take into account the dates of creation or last access in order to modulate the results obtained simply by comparing the weighting factors. Thus, in order to give an idea, a document with the lowest weighting factor could be selected to the detriment of another with a higher weighting factor but with a very old last-access date.

The electronic addresses could also be selected according to the computer field to which the user belongs.

In the ordering method according to the invention, the two electronic addresses URL1, URL2 could also be associated with each other in the same field of the computer request sent to the computer server. For example, a particular suffix representing the electronic address URL1 of the prior document D1 is added to the electronic address URL2 of the requested document D2. Such a computer request is for example described in detail in US patent 5 717 860 (Graber et al).

Moreover, in the ordering device according to the invention, the loader 40 and all the means of the ordering device which are incorporated therein could also be integrated directly into the browser 30, the cache memory of the loader 41 then corresponding to the cache memory 31 of the browser 30.

Finally, in order not to delay the supply of the requested document D2 to the user 4, the computer request could also be sent by the loader 40 to the computer server 2, a second request supplemented with the additional field XR then being produced and sent in its turn to the computer server.

In addition, during the management of the table of links 6, in incrementing the weighting factor account could be taken of the time elapsed between the reception of a first document D1 and the action of a user to request a second document D2 by clicking on an icon, for example.

The weighting factor could also be modulated according to the number of different users who have used the associated hypertext link.

## Claims

1. Method of managing a table of links (6) between documents linked by hypertext links and stored on a multiuser computer server (2), said computer server (2) being linked by a communication network (1) to users (4) adapted to establish a computer request for requesting communication, via the communication network (1), of a document (D2) linked by a hypertext link to a previously requested document (D1), said computer request containing the requested electronic address (URL2) of the requested document (D2) and the previous electronic address (URL1) of the previously requested document (D1), is characterised in that it comprises the following steps:
- receiving (E10) said computer request transmitted by the communication network (1);
- extracting (E11) the previous electronic address (URL1);
- extracting (E12) the requested electronic address (URL2);
- verifying (E13) the existence or not of the association of the previous electronic address (URL1-URL2) and the requested electronic address in said table of links (6);
- adding (E14) the association (URL1-URL2) in the table of links (6) if said association does not exist in said table of links (6); and
- incrementing (E15) a weighting factor associated with said association (URL1-URL2) in the table of links (6) on each reception of a computer request containing said association.

2. Management method according to Claim 1, characterised in that it also includes a step (E16) of updating a last-access date associated with said association (URL1-URL2) in the table of links (6), the last-access date corresponding to the date of reception of the last computer request containing said association.

3. Management method according to one of Claims 1 or 2, characterised in that it also includes a step (E14') of adding, to said table of links (6), a date of creation associated with said association (URL1-URL2), the date of creation corresponding to the date of reception of the first computer request containing said association.

4. Management method according to one of Claims 1 to 3, characterised in that it also includes the following steps:
- comparing (E17) the number (n) of associations stored in said table of links (6) with a threshold value (T); and
- eliminating (E18-20) at least one association from said table of links (6) when the number (n) of associations is greater than said threshold value (T).

5. Management method according to Claim 4, characterised in that the elimination step includes the following substeps:
- selecting (E18), from the table of links (6), associations associated with the oldest date of last access in said table of links, the date of last access corresponding to the date of reception of the last computer request containing said association;
- comparing (E19) the weighting factors associated with said associations selected in order to find the lowest weighting factor; and
- eliminating (E20) the association or associations associated with said lowest weighting factor.

6. Management method according to one of Claims 1 to 5, characterised in that it also includes a step (E21) of extracting information relating to the user (4) and a step (E22) of adding said information to the table of links (6).

7. Device for managing a table of links (6) between documents linked by hypertext links and stored on a multiuser computer server (2), said computer server (2) being linked by a communication network (1) to users (4) adapted to establish a computer request for requesting communication, via the communication network (1), of a document (D2) linked by a hypertext link to a previously requested document (D1), said computer request containing the requested electronic address (URL2) of the requested document (D2) and the previous electronic address (URL1) of the previously requested document (D1), characterised in that it has:
- means of receiving (10) said computer request transmitted by the communication network (1);
- means of extracting (11) the previous electronic address (URL1);
- means of extracting (12) the requested electronic address (URL2);
- means of verifying (13) the existence or not of the association (URL1-URL2) of the previous electronic address and the requested electronic address in said table of links (6);
- means of adding (14) the association (URL1-URL2) in the table of links (6) if said association does not exist in said table of links (6); and
- means of incrementing (15) a weighting factor associated with said association (URL1-URL2) in the table of links (6) on each reception of a computer request containing said association.

8. Management device according to Claim 7, characterised in that it also has means (16) of updating a last-access date associated with said association (URL1-URL2) in the table of links (6), the last-access date corresponding to the date of reception of the last computer request containing said association.

9. Management device according to one of Claims 7 or 8, characterised in that it also has means (14) of adding to said table of links (6) a date of creation associated with said association (URL1-URL2), the date of creation corresponding to the date of reception of the first computer request containing said association.

10. Management device according to one of Claims 7 to 9, characterised in that it also has:
- means (17) of comparing the number (n) of associations stored in said table of links (6) with a threshold value (T); and
- means (18-20) of eliminating at least one association from said table of links (6) when the number of associations (n) is greater than said threshold value (T).

11. Management device according to Claim 10, characterised in that the elimination means include:
- means of selecting (18), from the table of links (6), associations associated with the oldest date of last access in said table of links, the date of last access corresponding to the date of reception of the last computer request containing said association;
- means of comparing (19) the weighting factors associated with said associations selected in order to find the lowest weighting factor; and
- means of eliminating (20) the association or associations associated with said lowest weighting factor.

12. Management device according to one of Claims 7 to 11, characterised in that it also has means (21) of extracting information relating to the user (4) and means (22) of adding said information to said table of links (6).

13. Management device according to one of Claims 7 to 12, characterised in that it is incorporated in a microprocessor (500), a read only memory (501) comprising a program for managing said table of links (6), and a random access memory (502) containing registers adapted to record variables modified during the running of the program.

14. Method of generating a computer request containing the requested electronic address (URL2) of a requested document (D2) and the previous electronic address (URL1) of a previously requested document (D1), the requested document (D2) being linked by a hypertext link to the previously requested document (D1), characterised in that it includes the following steps:
- sending (E30) a computer request containing the requested electronic address (URL2) of the requested document (D2);
- adding (E31) an additional field to said computer request;
- entering (E32), in said additional field, the previous electronic address (URL1) of the previously requested document (D1); and
- transmitting (E34) said computer request to a computer server (2) via a communication network (1).

15. Generation method according to Claim 14, characterised in that it also includes a step (E33) of recording in said additional field information relating to said previously requested document (D1), such as the date and time of reception of the document (D1) previously requested by the user.

16. Device for generating a computer request containing a requested electronic address (URL2) of a requested document (D) and the previous electronic address (URL1) of a previously requested document (D1), the requested document (D2) being linked by a hypertext link to the previously requested document (D1), characterised in that it has:
- means of sending (70) a computer request containing the requested electronic address (URL2) of the requested document (D2);
- means of adding (71) an additional field to said computer request;
- means of entering (72), in said additional field, the previous electronic address (URL1) of the previously requested document (D1); and
- means of transmitting (73) said computer request to a computer server (2) via a communication network (1).

17. Generation device according to Claim 16, characterised in that the recording means (72) are adapted also to record in the additional field information relating to said previously requested document (D1), such as the date and time of reception of the document (D1) previously requested by the user.

18. Generation device according to one of Claims 16 or 17, characterised in that it is incorporated in a microprocessor (500), a read only memory (501) comprising a program for generating said computer request, and a random access memory (502) containing registers adapted to record variables modified during the running of the program.

19. Method of ordering, by a user (4), via a communication network (1), documents linked by hypertext links and stored on a multiuser computer server (2), characterised in that it includes the following steps:
- producing (E41) a computer request by the user (4), to request the communication of a document (D2) stored on said computer server (2);
- extracting (E42) the electronic address (URL2) of the requested document (D2);
- verifying (E43) whether or not the requested document (D2) is stored in a cache memory (41) of the user (4) and transmitting (E45) said document (D2) to the user (4) if it is stored;
- sending (E46) the computer request to the computer server (2);
- receiving (E64), by the user (4), a computer response containing said requested document (D2) and one or more electronic addresses (URL3, URL4) of pointed-to documents (D3, D4) linked by a hypertext link to said requested document (D2);
- transmitting (E45) the requested document (D2) to the user (4);
- extracting (E66) from the computer response the electronic address or addresses (URL3, URL4) of the pointed-to documents (D3, D4);
- sending (E68) one or more ancillary computer requests to request the pointed-to documents (D3, D4) from the computer server (2);
- receiving (E69) an ancillary computer response containing said pointed-to documents (D3, D4) and possibly one or more electronic addresses (URL7) of additional pointed-to documents (D7) linked by a hypertext link to said pointed-to documents (D3, D4); and
- storing (E70) said pointed-to (D3, D4) documents in the cache memory (41) of the user (4).

20. Ordering method according to Claim 19, characterised in that it includes, after the step (E66) of extracting the electronic address or addresses (URL3, URL4) of the pointed-to documents (D3, D4), a filtering step (E67) in which one or more of said electronic addresses are eliminated.

21. Ordering method according to one of Claims 19 or 20, characterised in that it also includes a step (E71) of comparing the volume of documents stored in said cache memory (41) with a threshold value (M), the steps of extracting (E66), sending (E68) ancillary computer requests, receiving (E69) an ancillary computer response, storing (E70), and possibly filtering (E67) and comparing (E71), being reiterated in order to store said additional pointed-to documents (D7) as long as the volume of documents stored in said cache memory is less than said threshold value (M).

22. Ordering method according to one of Claims 19 to 21, characterised in that it also includes the following step:
- adding (E47) an additional field (XR) to said computer request, said additional field (XR) containing the previous electronic address (URL1) of the document (D1) previously requested by the user (4).

23. Method of transferring documents by means of a multiuser computer server (2) via a communication network (1), the computer server cooperating with a table of links (6) containing associations of an electronic address of a first document and an electronic address of a second document linked to the first document by a hypertext link, characterised in that it includes the following steps:
- receiving (E50) a computer request sent by a user (4);
- extracting (E51) the electronic address (URL2, URL3, URL4) of the requested document (D2, D3, D4);
- selecting (E53, E55, E56), from said table of links (6), one or more associations of the electronic address (URL2; URL4) of the requested document (D2; D4) with respectively one or more electronic addresses (URL3, URL4; URL7) of pointed-to documents (D3, D4; D7) linked to said requested document (D2; D4) by a hypertext link; and
- adding (E61, E62) to a computer response containing said requested document (D2; D4) the electronic address or addresses (URL3, URL4; URL7) of pointed-to documents (D3, D4; D7) of the selected associations.

24. Transfer method according to Claim 23, characterised in that the step of selecting from the table of links includes the following substeps:
- extracting (E53) from the table of links (6) associations (URL2-URL3, URL2-URL4, URL2-URL6; URL4-URL7) of the electronic address (URL2; URL4) of the requested document (D2; D4) with respectively electronic addresses (URL3, URL4, URL6; URL7) of pointed-to documents (D3, D4, D6; D7) linked to said requested document (D2; D4) by a hypertext link;
- comparing (E55) weighting factors associated with said extracted associations; and
- selecting (E56) a subset of associations (URL2-URL3, URL2-URL4; URL4-URL7) of the highest weighting factors.

25. Transfer method according to Claim 24, characterised in that it also includes a truncation step (E60) in which one or more associations of said subset of associations are eliminated when the number of associations of said subset is greater than a predetermined threshold value (T').

26. Transfer method according to one of Claims 23 to 25, characterised in that the addition step includes a step (E61) of creating one or more additional fields (XL) in the computer response and a step (E62) of recording said electronic address or addresses (URL3, URL4, URL7) of pointed-to documents (D3, D4, D7) of the associations selected in said additional field or fields (XL).

27. Device for ordering by a user (4), via a communication network (1), documents linked by hypertext links and stored on a multiuser computer server (2), characterised in that it has:
- means of producing (33) a computer request by the user (4), to request the communication of a document (D2) stored on said computer server (2);
- means of extracting (42) the electronic address (URL2) of the requested document (D2);
- means of verifying (43) whether or not the requested document (D2) is stored in a cache memory (41) of the user;
- means of transmitting (44) said document (D2) to the user (4);
- means of sending (45) the computer request to the computer server (2);
- means of receiving (46), by the user, a computer response containing said requested document (D2) and one or more electronic addresses (URL3, URL4) of pointed-to documents (D3, D4) linked by a hypertext link to said requested document (D2);
- means of extracting (42) from the computer response the electronic address or addresses (URL3, URL4) of the pointed-to documents (D3, D4);
- means of sending (45) one or more ancillary computer requests to request the pointed-to document or documents (D3, D4) from the computer server (2);
- means of receiving (46) an ancillary computer response containing said pointed-to documents (D3, D4) and possibly one or more electronic addresses (URL7) of additional pointed-to documents (D7) linked by a hypertext link to said pointed-to documents (D3, D4); and
- means of storing (41) said pointed-to documents (D3, D4) in the cache memory (41) of the user (4).

28. Ordering device according to Claim 27, characterised in that it has filtering means (48) adapted to eliminate one or more of said electronic addresses of the pointed-to documents.

29. Ordering device according to one of Claims 27 or 28, characterised in that it has means (51) for comparing the volume of documents stored in said cache memory (41) with a threshold value (M).

30. Ordering device according to one of Claims 27 to 29, characterised in that it also has means (49) of adding an additional field (XR) to said computer request adapted to contain the previous electronic address (URL1) of the document (D1) previously requested by the user (4).

31. Ordering device according to one of Claims 27 to 30, characterised in that the means of extracting (42), verifying (43), transmitting (44), sending (45), receiving (46) and storing (41), and possibly filtering (48), adding (49) and comparing (51), are incorporated in an intermediate server (40) disposed between the communication network (1) and a browser (30) having said means (33) of producing a computer request.

32. Ordering device according to one of Claims 27 to 31, characterised in that it is incorporated in a microprocessor (500), a read only memory (501) comprising a program for ordering documents, and a random access memory (502) containing registers adapted to record variables modified during the running of the program.

33. Device for transferring documents by a multiuser computer server (2) via a communication network (1), the computer server (2) cooperating with a table of links (6) containing associations of an electronic address of a first document and an electronic address of a second document linked to said first document by a hypertext link, characterised in that it has:
- means of receiving (10) a computer request sent by a user (4);
- means of extracting (61) the electronic address (URL2, URL3, URL4) of the requested document (D2, D3, D4);
- means of selecting (62), from said table of links, one or more associations of the electronic address (URL2; URL4) of the requested document (D2; D4) with respectively one or more electronic addresses (URL3, URL4; URL7) of pointed-to documents (D3, D4; D7) linked to said requested document (D2; D4) by a hypertext link; and
- means of adding (63) to a computer response containing said requested document (D2; D4) the electronic address or addresses (URL3, URL4; URL7) of pointed-to documents (D3, D4; D7) of the selected associations.

34. Transfer device according to Claim 33, characterised in that the means (62) of selecting from the table of links (6) include:
- means of extracting (24) from the table of links (6) associations (URL2-URL3, URL2-URL4, URL2-URL6; URL4-URL7) of the electronic address (URL2; URL4) of the requested document (D2; D4) with respectively electronic addresses (URL3, URL4, URL6; URL7) of pointed-to documents (D3, D4, D6; D7) linked to said requested document (D2; D4) by a hypertext link;
- means of comparing (65) weighting factors associated with said extracted associations; and
- means of selecting (66) a subset of associations (URL2-URL3, URL2-URL4; URL4-URL7) of the highest weighting factors.

35. Transfer device according to Claim 34, characterised in that it also has truncation means (67) adapted to eliminate one or more associations of said subset of associations when the number of associations of said subset is greater than a predetermined threshold value (T').

36. Transfer device according to one of Claims 33 to 35, characterised in that the addition means (63) include means (68) of creating one or more additional fields (XL) in the computer response and means (69) of recording said electronic address or addresses (URL3, URL4, URL7) of pointed-to documents (D3, D4, D7) of the selected associations in said additional field or fields (XL).

37. Transfer device according to one of Claims 33 to 36, characterised in that it is incorporated in a microprocessor (500), a read only memory (501) comprising a program for transferring documents, and a random access memory (502) containing registers adapted to record variables modified during the running of the program.

38. Computer, characterised in that it has means adapted to implement the management method according to one of Claims 1 to 6.

39. Computer, characterised in that it has a management device according to one of Claims 7 to 13.

40. Computer, characterised in that it has means adapted to implement the generation method according to one of Claims 14 or 15.

41. Computer, characterised in that it has a generation device according to one of Claims 16 to 18.

42. Computer, characterised in that it has means adapted to implement the ordering method according to one of Claims 19 to 22.

43. Computer, characterised in that it has means adapted to implement the transfer method according to one of Claims 23 to 26.

44. Computer, characterised in that it has an ordering device according to one of Claims 27 to 32.

45. Computer, characterised in that it has a transfer device according to one of Claims 33 to 37.

46. Computer server, characterised in that it has means adapted to implement the management method according to one of Claims 1 to 6.

47. Computer server, characterised in that it has a management device according to one of Claims 7 to 13.

48. Computer server, characterised in that it is connected to a communication network (1) by means of a computer having means adapted to implement the management method according to one of Claims 1 to 6.

49. Computer server, characterised in that it is connected to a communication network (1) by means of a computer having a management device according to one of Claims 7 to 13.

50. Computer server, characterised in that it has means adapted to implement the ordering method according to one of Claims 19 to 22.

51. Computer server, characterised in that it has means adapted to implement the transfer method according to one of Claims 23 to 26.

52. Computer server, characterised in that it has an ordering device according to one of Claims 27 to 32.

53. Computer server, characterised in that it has a transfer device according to one of Claims 33 to 37.

54. Computer server, characterised in that it is connected to a communication network (1) by means of a computer having means adapted to implement the ordering method according to one of Claims 19 to 22.

55. Computer server, characterised in that it is connected to a communication network (1) by means of a computer having means adapted to implement the transfer method according to one of Claims 23 to 26.

56. Computer server, characterised in that it is connected to a communication network (1) by means of a computer having an ordering device according to one of Claims 27 to 32.

57. Computer server, characterised in that it is connected to a communication network (1) by means of a computer having a transfer device according to one of Claims 33 to 37.

58. Computer server according to one of Claims 46 to 57, characterised in that it is connected to several users (4) by a worldwide area network (1).

59. Communication network, characterised in that it has means adapted to implement the management method according to one of Claims 1 to 6.

60. Communication network, characterised in that it has a management device according to one of Claims 7 to 13.

61. Communication network, characterised in that it has means adapted to implement the generation method according to one of Claims 14 or 15.

62. Communication network, characterised in that it has a generation device according to one of Claims 16 to 18.

63. Communication network, characterised in that it has means adapted to implement the ordering method according to one of Claims 19 to 22.

64. Communication network, characterised in that it has means adapted to implement the transfer method according to one of Claims 23 to 26.

65. Communication network, characterised in that it has an ordering device according to one of Claims 27 to 32.

66. Communication network, characterised in that it has a transfer device according to one of Claims 33 to 37.

67. Information storage means which can be read by a computer or a microprocessor, possibly removable, characterised in that it stores program instructions adapted to implement the management method according to one of Claims 1 to 6.

68. Information storage means which can be read by a computer or a microprocessor, possibly removable, characterised in that it stores program instructions adapted to implement the generation method according to one of Claims 14 to 15.

69. Information storage means which can be read by a computer or a microprocessor, possibly removable, characterised in that it stores program instructions adapted to implement the ordering method according to one of Claims 19 to 22.

70. Information storage means which can be read by a computer or a microprocessor, possibly removable, characterised in that it stores program instructions adapted to implement the transfer method according to one of Claims 23 to 26.
